# EUROPÄISCHE PATENTSCHRIFT

(11) **EP 2 594 185 B1**
(45) Veröffentlichungstag und Bekanntmachung des Hinweises auf die Patenterteilung: **09.03.2016**
(21) Anmeldenummer: 13000625.7
(22) Anmeldetag: 07.02.2013
(51) Int. Cl.: A47L 15/42, D06F 39/00, D06F 39/08

(54) **Reinigungsgerät mit Bottich, Abwassertank und Verbindungsleitung**
Cleaning device with tub, waste water tank and connecting line
Appareil de nettoyage avec cuve, réservoir pour eaux usées et conduit de liaison

(43) Veröffentlichungstag der Anmeldung: 22.05.2013
(73) Patentinhaber: V-Zug AG, 6301 Zug (CH)
(72) Erfinder: Schellenberg, Guido, 5702 Niederlenz (CH)
(74) Vertreter: Sutter, Kurt

(56) Entgegenhaltungen:
- EP-A1- 2 224 049
- EP-A1- 2 312 045
- DE-A1-102008 054 833
- FR-A1- 2 951 469

## Beschreibung

### Gebiet der Erfindung

Die Erfindung betrifft ein Reinigungsgerät, insbesondere eine Waschmaschine oder einen Geschirrspüler, mit einem Bottich zur Aufnahme des zu reinigenden Guts und mit einem Abwassertank zum Zwischenspeichern von Abwasser aus dem Bottich. Weiter besitzt das Gerät eine Wärmepumpe, um dem Abwassertank Wärme zu entziehen und dem Prozesswasser im Bottich zuzuführen.

### Hintergrund

Ein derartiges Gerät in Form einer Haushaltwaschmaschine wird in EP 2 224 049 beschrieben. Es besitzt einen Bottich zur Aufnahme einer Trommel, in welcher die zu reinigende Wäsche untergebracht wird. Weiter ist ein Abwassertank vorgesehen, in welchem Prozesswasser aus dem Bottich vor dem Abführen zwischengelagert werden kann. Um dem Prozesswasser im Abwassertank Wärme zu entziehen, ist eine Wärmepumpe vorgesehen, mit welcher Wärme vom Abwassertank zum Prozesswasser im Bottich transferiert werden kann. Der Abwassertank wird dabei soweit abgekühlt, dass ein Teil des Prozesswassers im Abwassertank gefriert. Zwischen dem Sumpf unterhalb des Bottichs und dem Abwassertank ist eine erste Verbindungsleitung vorgesehen, welche Prozesswasser vom Sumpf zum Abwassertank führt und deren Scheitelbereich höher als die Oberseite des Abwassertanks und als der Sumpf liegt. Die erste Verbindungsleitung ist im Scheitelbereich entlüftet. Eine zweite Verbindungsleitung verbindet den Abwassertank mit einem Ablauf des Geräts.

### Darstellung der Erfindung

Es stellt sich die Aufgabe, eine Vorrichtung dieser Art bereitzustellen, welche eine gute Energieeffizienz besitzt.

Diese Aufgabe wird gelöst, indem am Scheitelbereich der Verbindungsleitung keine Entlüftung angeordnet ist, d.h. dass der Scheitelbereich nicht gelüftet ist. Die erste Verbindungsleitung mündet in die Oberseite des Abwassertanks.

Dabei ist unter einer Entlüftung eines Gefässes, wie z.B. einer Verbindungsleitung, eine Leitung zu verstehen, welche das Gefäss mit einer in die Umgebung mündenden Entlüftungsöffnung verbindet. Diese Leitung ist so ausgestaltet, dass allfällig in sie eindringendes Wasser aufgrund der Schwerkraft abfliesst, so dass die Leitung frei bleibt.

Indem auf eine Entlüftung des Scheitelbereichs der ersten Verbindungsleitung verzichtet wird, bildet sich in diesem Bereich im stationären Fall eine Lufttasche gefangen zwischen dem Wasser im Abwassertank und dem Wasser im Sumpf. Diese Lufttasche ist dazu in der Lage, dank der statischen Druckkraft des Wassers im Sumpf einem Überdruck im Abwassertank entgegenzuwirken. Wenn nun das Prozesswasser im Abwassertank mit der Wärmepumpe auf gegen 0°c abgekühlt wird, und insbesondere wenn es sogar teilweise ausgefroren wird, und sich dabei ausdehnt, vermag die erwähnte Lufttasche dem dabei entstehenden Überdruck entgegenzuwirken, so dass das kalte Wasser nicht zum Bottich hin, sondern in erster Linie durch die zweite Verbindung zum Ablauf hin gedrückt wird.

Dieser Konstruktion liegt die Erkenntnis zugrunde, dass ohne die erfindungsgemässe Massnahme bei Abkühlen des Abwassertanks kaltes Wasser aufgrund seiner thermischen Ausdehnung durch die erste Verbindungsleitung zum Bottich hin gedrückt wird, so dass sich die Energieeffizienz des Geräts verschlechtert.

Erfindungsgemäss fällt die erste Verbindungsleitung vom Scheitelbereich zum Sumpf hin monoton, insbesondere streng monoton, ab. Dadurch wird das Abfliessen von Wasser zur Sumpf hin vereinfacht, wenn die erste Pumpe ausser Betrieb gesetzt wird.

Auch vom Scheitelbereich zum Abwassertank hin fällt die erste Verbindungsleitung vorteilhaft monoton, insbesondere streng monoton, ab, so dass das Wasser einfacher entleert werden kann.

Die vorliegende Erfindung eignet sich besonders zum Einsatz in Waschmaschinen (Waschautomaten) oder Geschirrspülern, insbesondere zum Einsatz in Haushalts-Waschmaschinen oder Haushalts-Geschirrspülern.

### Kurze Beschreibung der Zeichnungen

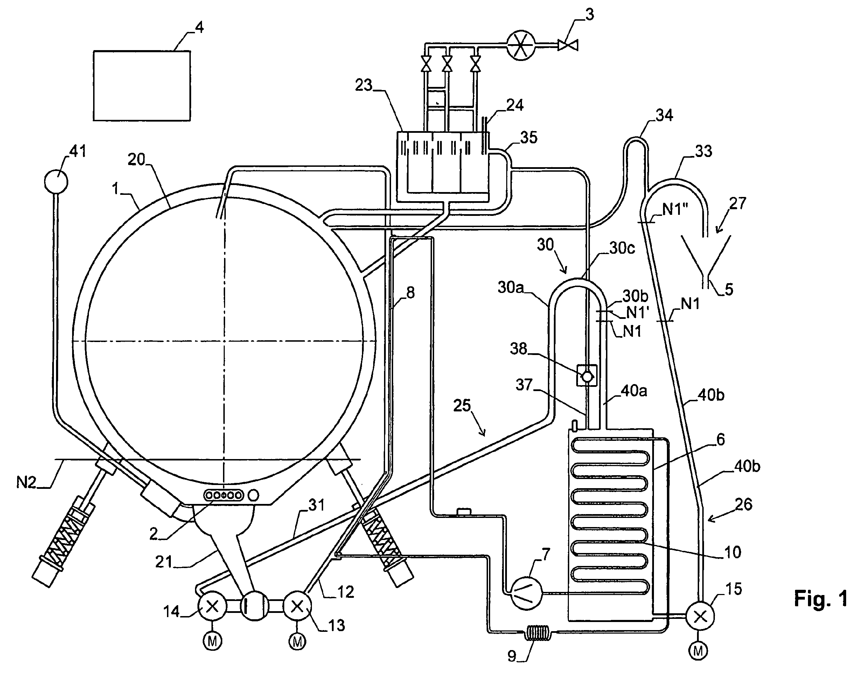

Weitere Ausgestaltungen, Vorteile und Anwendungen der Erfindung ergeben sich aus den abhängigen Ansprüchen und aus der nun folgenden Beschreibung anhand der Figur 1. Diese zeigt eine schematische Darstellung der Komponenten einer Waschmaschine.

### Wege zur Ausführung der Erfindung

### Definitionen:

Begriffe der "unten", "oben", "tiefer", "höher", "unterhalb", "oberhalb", "vertikal", etc. betreffen die bestimmungsgemässe Montageposition des Geräts.

Die Begriffe "monoton" und "streng monoton" sind im mathematischen Sinne zu verstehen. Eine Verbindungsleitung, die von A nach B "monoton abfällt", ist also eine Verbindungsleitung, bei welcher gilt: Sind X1 und X2 zwei Abschnitte der Leitung und liegt X1 näher bei B, so liegt X1 tiefer oder gleich tief als bzw. wie X2. Wenn die Verbindungsleitung von A nach B "streng monoton abfällt", so liegt X1 tiefer als X2.

### Geräteaufbau:

In Fig. 1 sind die wichtigsten Komponenten einer Waschmaschine dargestellt. Auch wenn es sich dabei grundsätzlich um eine schematische Darstellung handelt, sind die relativen vertikalen Position und Höhen der Komponenten jeweils möglichst korrekt wiedergegeben.

Die in Fig. 1 dargestellte Waschmaschine besitzt einen Bottich 1, in welchem in der Regel eine drehbare Trommel 20 zur Aufnahme der zu waschenden Wäsche angeordnet ist. Der Bottich 1 ist gefedert gelagert. Unterhalb des Bottichs 1 ist ein Sumpf 21 angeordnet, der mindestens einen Teil des Prozesswassers aufnimmt. In einem unteren Bereich des Bottichs 1 oder im Sumpf 21 ist (optional) eine elektrische Heizung 2 vorgesehen, welche dazu dient, Prozesswasser elektrisch aufzuheizen. Weiter besitzt das Gerät in bekannter weise einen Trommelantrieb, um die Trommel 20 zu drehen. Eine Steuerung 4 kontrolliert und steuert die Operationen aller Komponenten. Ein derart ausgestaltetes Gerät ist dem Fachmann bekannt.

Frischwasser wird dem Gerät zur Verwendung als Prozesswasser über ein Ventil 3 und eine Mischkammer 23 zugeführt. In der Mischkammer 23 kann dem Wasser in bekannter Weise Waschmittel zugegeben werden. Die Mischkammer 23 ist über eine Öffnung 24 mit der Umgebung verbunden, d.h. sie ist gelüftet.

Gebrauchtes Wasser wird in eine Abwasserleitung 5 abgepumpt. Auch diese Komponenten sind dem Fachmann grundsätzlich bekannt.

In der Ausführung nach Fig. 1 kann das Abwasser, d.h. das verbrauchte Prozesswasser, aus dem Bottich 1 über eine erste Verbindungsleitung 25 in einen Abwassertank 6 geführt werden. Vom tiefsten Punkt des Abwassertanks 6 führt eine zweite Verbindungsleitung 26 über eine Fallstrecke 27 zur Abwasserleitung 5.

Das Gerät besitzt weiter eine Wärmepumpe Umfassend einen Kompressor 7, von welchem ein Wärmepumpenmedium zu einem Kondensator 8 gepumpt wird, wo unter Abgabe von Wärme eine Verflüssigung stattfindet. Vom Kondensator 8 gelangt das Medium über ein Drosselorgan 9 zu einem Verdampfer 10, wo das Medium unter Aufnahme von Wärme verdampft. Vom Verdampfer 10 läuft das Medium zurück zum Kompressor 7.

Das Drosselorgan 9 kann z.B. als Kapillare oder Expansionsventil ausgestaltet sein.

In der in Fig. 1 gezeigten Ausführung ist der Kondensator 8 an bzw. in einer Zirkulationsleitung 12 angeordnet. Es ist eine Zirkulationspumpe 13 vorgesehen, um Prozesswasser vom Sumpf 21 durch die Zirkulationsleitung 12 in einen oberen Bereich des Bottichs 1 zu pumpen, wo es wieder in den Bottich 1 eingespritzt wird. Ist die Wärmepumpe im Betrieb, wird auf diese Weise dem Prozesswasser im Bottich 1 Warme zugeführt.

Es ist denkbar, den Kondensator 8 auch direkt am Bottich 1, am Sumpf 21 unterhalb des Bottichs oder an der Zirkulationspumpe 13 anzuordnen.

Der Verdampfer 10 ist thermisch mit dem Abwassertank 6 und somit mit dem sich im Abwassertank 6 befindlichen Abwasser gekoppelt. Er kann innerhalb des Abwassertanks 6 oder in oder an dessen Wand angeordnet sein.

Eine erste Pumpe 14 dient dazu, Prozesswasser aus dem Sumpf 21 und somit aus dem Bottich 1 durch die erste Verbindungsleitung 25 in den Abwassertank 6 zu fördern. In der dargestellten Ausführung befindet sich diese erste Pumpe am tiefsten Punkt der ersten Verbindungsleitung 25.

Eine zweite Pumpe 15 dient dazu, Wasser aus dem Abwassertank 6 durch die zweite Verbindungsleitung 26 zur Abwasserleitung 5 zu fördern. Die zweite Pumpe 15 ist im gezeigten Ausführungsbeispiel am tiefsten Punkt der zweiten Verbindungsleitung 26 angeordnet.

Die beiden Pumpen 14 und 15 sind so ausgestaltet, dass sie in ausgeschaltetem Zustand für Wasser in beide Richtungen durchlässig sind. Beispielsweise handelt es sich um Flügelradpumpen.

Die erste Verbindungsleitung 25 besitzt einen Scheitelbereich 30, der höher als die Oberseite des Abwassertanks 6 und höher als der Sumpf 21 angeordnet ist. Dieser Scheitelbereich 30 besitzt ungefähr invertierte U-Form und weist einen ersten, vertikal verlaufenden Abschnitt 30a, einen zweiten, vertikal verlaufenden Abschnitt 30b und einen gekrümmten, den ersten und den zweiten Abschnitt 30a, 30b verbindenden dritten Abschnitt 30c auf. Zwischen dem Scheitelbereich 30 und dem Sumpf besitzt die erste Verbindungsleitung 25 im dargestellten Ausführungsbeispiel einen schräg zum Sumpf 21 hin abfallenden Abschnitt 31.

Die erste Verbindungsleitung 25 ist an ihrem tieferen Ende über die erste Pumpe 14 mit dem Sumpf 21 verbunden. An ihrem höheren Ende mündet die erste Verbindungsleitung 25 in die Oberseite des Abwassertanks 6.

Die erste Verbindungsleitung 25 besitzt über ihre ganze Länge vorzugsweise einen Durchmesser von mindestens 10 mm, insbesondere ca. 20 mm, so dass, wenn sich im Scheitelbereich 30 Wasser befindet und die erste Pumpe 14 ausgeschaltet wird, das Wasser zum Sumpf 21 hin abliessen und durch aus dem Bottich stammende, durch den schräg verlaufenden Abschnitt 31 hochsteigende Luft ersetzt werden kann.

Die zweite Verbindungsleitung 26 ist an ihrem tieferen Ende, wie erwähnt, mit dem Bodenbereich des Abwassertanks 6 verbunden. Von dort steigt sie monoton, insbesondere streng monoton, zu einem höchsten Bereich 33, von welchem sie wieder zur Fallstrecke 27 hin abfällt. Der höchste Bereich 33 der zweiten Verbindungsleitung 26 liegt höher als der Scheitelbereich 30 der ersten Verbindungsleitung 25. Am höchsten Bereich 33 weist die zweite Verbindungsleitung 26 eine Entlüftung 34 auf, welche in den Bottich 1 mündet, der seinerseits über eine Entlüftungsleitung 35 mit der entlüfteten Mischkammer 23 verbunden ist.

Der Abwassertank 6 weist ebenfalls eine Entlüftung 37 auf, welche über die Entlüftungsleitung 35 mit der Mischkammer 23 verbunden ist. In dieser Entlüftung 37 ist oberhalb des Abwassertanks 6 ein Schwimmerventil 38 angeordnet, das die Entlüftung 37 wasserdicht verschliesst, wenn das Prozesswasser in der Entlüftung 37 bis zum Schwimmerventil 38 ansteigt.

### Betrieb:

Die Funktionsweise des Geräts während eines Waschprozesses, d.h. einem Zyklus zum Waschen einer Wäschecharge, ist wie folgt:
1. Der Prozess beginnt in der Regel mit gefülltem Abwassertank 6. Das Wasser im Abwassertank 6 stammt z.B. aus einem früheren Waschprozess. Es befindet sich u.U. schon längere Zeit im Abwassertank 6 und besitzt z.B. ungefähr Zimmertemperatur. Das Wasser im Abwassertank 6 erstreckt sich in einer ersten Wassersäule 40a in den tankseitigen Endabschnitt der ersten Verbindungsleitung 25 sowie in einer zweiten Wassersäule 40b in die zweite Verbindungsleitung 26, und zwar bis zu einem Niveau N1, das oberhalb der Oberseite des Abwassertanks 6 aber unterhalb des Scheitelbereichs 30 liegt.
2. Zu Beginn des waschprozesses wird über das Frischwasserventil 3 Frischwasser für den Hauptwaschgang in den Bottich 1 eingelassen, z.B. 20 bis 25 Liter für 8 kg Wäsche. Unter Normbedingungen besitzt dieses Frischwasser z.B. eine Temperatur von 15°C. Die Steuerung 4 ist so ausgestaltet, dass sie im Bottich 1 ein Wasserniveau N2 einstellt, das unterhalb des Scheitelbereichs 30 liegt. Hierzu kann z.B. ein Drucksensor 41 vorgesehen sein, der den Wasserdruck im Sumpf 21 misst, woraus die Steuerung 4 das Wasserniveau im Bottich 1 abschätzen kann.
3. Gleichzeitig wird die Wärmepumpe gestartet, mit dem Ziel, Wärmeenergie aus dem Abwassertank 6 zu entziehen und dem Prozesswasser im Bottich 1 zuzuführen. Die Wärmepumpe wird erst ausgeschaltet, wenn das Prozesswasser im Abwassertank 6 komplett zu vereisen droht, oder wenn die Temperatur des Prozesswassers im Bottich die gewünschte Betriebstemperatur erreicht hat, je nachdem, was zuerst eintritt. Wenn das Wasser im Abwassertank 6 eine Temperatur gegen 0°C erreicht, und insbesondere wenn es auszufrieren beginnt, vergrössert sich sein Volumen. Der entstehende Überdruck versucht einerseits die Wassersäule 40a und andererseits die Wassersäule 40b anzuheben. Ein Anheben der Wassersäule 40a in der ersten Verbindungsleitung erhöht jedoch den Druck in der Lufttasche, welche im Scheitelbereich 30 zwischen der ersten Wassersäule 40a und dem Prozesswasser im Bottich 1 liegt, so dass eine Gegenkraft auf die erste Wassersäule 40a von oben ausgeübt wird. Deshalb steigt die erste Wassersäule 40a nur wenig an, bis auf ein Niveau N1', das noch unterhalb des Scheitelbereichs 30 liegt. So wird ein Zurückläufen des kalten Prozesswassers aus dem Abwassertank 6 in den Bottich 1 vermieden. Die zweite Wassersäule 40b in der zweiten Verbindungsleitung 26 wird demgegenüber stärker angehoben, bis auf ein Niveau N1", das auch den höchsten Bereich 33 erreichen kann, in welchem Fall überschüssiges Prozesswasser in den Abfluss 5 abgegeben wird.
5. Die Temperatur des Prozesswassers wird dabei mit einem Temperatursensor gemessen. Erreicht die Temperatur im Bottich 1 bzw. im Prozesswasser die Betriebstemperatur (je nach Programm z.B. zwischen 20, 30, 40, 60 oder 95°C) vor dem vollständigen Vereisen des Abwassertanks 6 nicht, oder soll der Prozess schnell gehen, so kann zusätzlich mit der elektrischen Heizung 2 geheizt werden, entweder gleichzeitig mit oder nach dem Heizen mittels Wärmepumpe. Mit dem so aufgewärmten Prozesswasser wird die Wäsche gewaschen.
6. Nachdem die Wärmepumpe nicht mehr benötigt wird und während die Wäsche gewaschen wird, kann das verbleibende flüssige Prozesswasser im Abwassertank 6 durch Betreiben der zweiten Pumpe 15 durch die zweite Verbindungsleitung 26 in die Abwasserleitung 5 gefördert werden. Die erste Pumpe 14 ist dabei ausgeschaltet. Das aus dem Abwassertank 6 abgepumpte Wasser wird durch Luft ersetzt, die durch die Entlüftung 37 einströmt.
7. Gegen Ende des Hauptwaschgangs wird die erste Pumpe 14 in Betrieb gesetzt. Dadurch gelangt warmes Prozesswasser aus dem Bottich 1 durch die erste Verbindungsleitung 25 in den Abwassertank 6 und trifft auf das dort verbliebene Eis. Das Eis wird dabei angeschmolzen oder ganz geschmolzen. Die Luft im Abwassertank 6 wird über die Entlüftung 37 verdrängt.
8. Wird die erste Pumpe 14 wieder abgeschaltet, so ist die erste Verbindungsleitung 25 zunächst mit Wasser gefüllt. Dieses Wasser beginnt nun durch die Pumpe 14 abzufliessen und wird durch Luft ersetzt, die aus dem Bottich 1 angesaugt wird und in die erste Verbindungsleitung hochsteigt. Es entsteht das oben erwähnte Luftposer im Scheitelbereich 30. Das mit dem Abwassertank 6 kommunizierende Wasser stellt sich wieder ungefähr auf den Pegel N1 ein.
9. Über Frischwasserventil 3 wird neues Frischwasser (z.B. 15 bis 20 Liter) für eine Spülphase eingelassen.
10. Optional kann nun die Wärmepumpe wieder in Gang gesetzt werden, um die Wärme vom Abwassertank 6 in das Prozesswasser im Bottich 1 zu fördern. Wiederum kann dabei das Prozesswasser im Abwassertank 6 teilweise gefroren werden.
11. Das Wasser aus dem Bottich 1 wird wiederum abgepumpt und kann optional zum Enteisen des Abwassertanks 6 verwendet werden. Nach dem Abpumpen bildet sich wieder das Luftposter im Scheitelbereich 30.
12. Über Frischwasserventil 3 wird neues Frischwasser (z.B. 15 bis 20 Liter) für eine Veredlungsphase (optional) eingelassen.
13. Die Wärmepumpe kann optional wieder in Gang gesetzt werden, um die Wärme vom Abwassertank 6 in das Prozeaswasser im Bottich 1 zu fördern.
14. Das Wasser aus dem Bottich 1 wird wiederum abgepumpt und kann nötigenfalls dazu verwendet werden, den Abwassertank 6 zu enteisen. Nach dem Abpumpen bildet sich wieder das Luftposter im Scheitelbereich 30.
15. Während einer Schleuderphase (Zentrifugierphase) wird der Wäsche durch Zentrifugieren Wasser entzogen.

Wie sich aus dem Obigen ergibt, kann somit das Prozesswasser mit der Wärmepumpe geheizt werden, indem das Prozesswasser im Abwassertank teilweise gefroren wird. Zunächst wird dem Prozesswasser im Abwassertank somit die thermische Energie entzogen, die sich durch das Abkühlen des Wassers von seiner Starttemperatur auf ca. 0°C ergibt, und sodann kann auch noch die latente Wärme genutzt werden, die beim teilweisen Gefrieren des Wassers frei wird.

### Bemerkungen:

Die Erfindung eignet sich grundsätzlich auch für den Einsatz in grossgewerblichen Geräten, wie z.B. in Restaurations- oder Hotelbetrieben, aber insbesondere in Haushaltgeräten, im letzteren Fall sowohl in Mehrfamilienhäusern als auch in Einfamilienhäusern oder Wohnungen.

Das Gerät kann mit der Wärmepumpe sowie auch konventionell betrieben werden. Hierzu werden dem Benutzer in an sich bekannter Weise unterschiedliche Programmoptionen zur Auswahl zur Verfügung gestellt. Wählt der Benutzer eine der im obigen beschriebenen Funktionsweisen aus, so führt die Steuerung 4 die hierzu notwendigen Schritte aus, wozu sie in geeigneter Weise, z.B. durch Mikroprogrammierung und/oder geeignete Logikschaltungen, ausgestaltet ist.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Reinigungsgerät, insbesondere Waschmaschine oder Geschirrspüler, zum Reinigen eines zu reinigenden Guts mittels Prozesswassers in einem Waschprozess, mit
einer Gerätesteuerung (4),
einem Bottich (1) zur Aufnahme des zu reinigenden Guts,
einem unterhalb des Bottichs (1) angeordneten Sumpf (21),
einem Abwassertank (6) zum Zwischenspeichern von Abwasser aus dem Bottich (1),
einer Wärmepumpe (7 - 10), um dem Abwassertank (6) Wärme zu entziehen und dem Prozesswasser im Bottich (1) zuzuführen,
einer ersten Verbindungsleitung (25), welche vom Sumpf (21) zum Abwassertank (6) führt, wobei die erste Verbindungsleitung (25) zwischen dem Bottich (1) und dem Abwassertank einen Scheitelbereich (30) höher als eine Oberseite des Abwasaertanks (6) und höher als der Sumpf (21) aufweist, wobei die erste Verbindungsleitung (25) in die Oberseite des Abwassertanks (6) mündet und wobei die erste Verbindungsleitung (25) vom Scheitelbereich (30) monoton zum Sumpf (21) hin abfällt,
einer zweiten Verbindungsleitung (26), über welche der Abwasaertank (6) mit einem Ablauf (5) des Reinigungsgeräts verbunden ist, und
einer ersten Pumpe (15), um Prozesswasser durch die erste Verbindungsleitung (25) vom Bottich (1) in den Abwassertank (6) zu fördern,
**dadurch gekennzeichnet, dass** am Scheitelbereich (30) der ersten Verbindungsleitung (25) keine Entlüftung angeordnet ist.

2. Reinigungsgerät nach Anspruch 1, wobei die Gerätesteuerung (4) dazu ausgestaltet ist, die Wärmepumpe (7 - 10) so lange zu betreiben, dass das Prozesswasser im Abwassertank (6) zumindest teilweise ausfriert.

3. Reinigungsgerät nach einem der vorangehenden Ansprüche, wobei die erste Verbindungsleitung (25) vom Scheitelbereich (30) monoton, insbesondere streng monoton, zum Abwassertank (6) hin abfällt.

4. Reinigungsgerät nach einem der vorangehenden Ansprüche, wobei die erste Verbindungsleitung (25) vom Scheitelbereich (30) streng monoton zum Sumpf (21) hin abfällt.

5. Reinigungsgerät, nach einem der vorangehenden Ansprüche, wobei die die erste Verbindungsleitung (25) im Scheitelbereich (30) einen ersten, vertikal verlaufenden Abschnitt (30a), einen zweiten vertikal verlaufenden Abschnitt (30b) und einen gekrümmten, den ersten und den zweiten Abschnitt (30a, 30b) verbindenden dritten Abschnitt (30c) aufweist.

6. Reinigungsgerät nach einem der vorangehenden Ansprüche, wobei der Abwassertank (6) eine Entlüftung (37) aufweist.

7. Reinigungsgerät nach Anspruch 6, wobei in der Entlüftung (37) oberhalb des Abwassertanks (6) ein Schwimmerventil (38) angeordnet ist, welches die Entlüftung (37) wasserdicht verschliesst, wenn das Prozesswasser bis zum Schwimmerventil (38) ansteigt.

8. Reinigungsgerät nach einem der vorangehenden Ansprüche, wobei die zweite Verbindungsleitung (26) einen höchsten Bereich (33) aufweist, der höher liegt als der Scheitelbereich (30) der ersten verbindungsleitung (25).

9. Reinigungsgerät nach einem der vorangehenden Ansprüche, wobei die zweite Verbindungsleitung (26) eine Entlüftung (34) aufweist.

10. Reinigungsgerät nach einem der vorangehenden Ansprüche, wobei die Steuerung (4) dazu ausgestaltet ist, während dem Entzug von Wärme aus dem Abwassertank (6) mittels der Wärmepumpe (7 - 10) im Bottich (1) ein Wasserniveau (N2) einzustellen, das unterhalb des höchsten Punkts des Scheitelbereichs (30) der ersten Verbindungsleitung (25) liegt.

11. Reinigungsgerät nach einem der vorangehenden Ansprüche, wobei die Steuerung (4) dazu ausgestaltet ist, im Waschprozess mindestens einen Teil des im Abwassertank (6) befindlichen Eises durch Zuführen von Prozesswasser aus dem Bottich (1) zu schmelzen, und insbesondere wobei die Steuerung (4) dazu ausgestaltet ist, in einer Prozessphase Prozesswasser im Bottich (1) mit der Wärmepumpe (7 - 10) zu erwärmen und dabei das Abwasser im Abwassertank (6) teilweise zu gefrieren, sodann noch nicht gefrorenes Abwasser aus dem Abwassertank (6) abzulassen, und sodann, später in der Prozessphase, erwärmtes Prozesswasser aus dem Bottich (1) in den Abwassertank (6) zu führen, um dort gefrorenes Abwasser zu schmelzen.

12. Reinigungsgerät nach einem der vorangehenden Ansprüche, wobei die erste Verbindungsleitung (25) einen Durchmesser von mindestens 10 mm aufweist.

## Claims

1. Cleaning device, in particular washing machine or dishwasher, for cleaning a merchandise to be cleaned with process water in a washing process, with
a device regulator (4),
a vat (1) for receiving the merchandise to be cleaned,
a sump (21) arranged below the vat (1),
a waste water tank (6) for temporarily storing waste water from the vat (1),
a heat pump (7-10) for extracting heat from the waste water tank and for adding it to the process water in the vat (1),
a first connecting pipe (25), which leads from the sump (21) to the waste water tank (6), wherein the first connecting pipe (25) has an apex area (30) higher than an upper side of the waste water tank (6) and higher than the sump (21) between the vat (1) and the waste water tank, wherein the first connecting pipe (25) leads into the upper side of the waste water tank (6) and wherein the first connecting pipe (25) decreases from the apex area (30) monotonically towards the sump (21),
a second connecting pipe (26), via which the waste water tank (6) is connected with a discharge (5) of the cleaning device, and
a first pump (15) for transporting process water through the first connecting pipe (25) from the vat (1) into the waste water tank (6),
**characterized in that** no aeration is arranged at the apex area (30) of the first connecting pipe (25).

2. Cleaning device according to claim 1, wherein the device controller (4) is designed to operate the heat pump (7-10) as long as the process water inside the waste water tank (6) freezes at least partially.

3. Cleaning device according to one of the preceding claims, wherein the first connecting pipe (25) decreases monotonically, in particular strictly monotonically from the apex area (30) towards the waste water tank (6).

4. Cleaning device according to one of the preceding claims, wherein the first connecting pipe (25) decreases strictly monotonically from the apex area (30) to the sump (21).

5. Cleaning device according to one of the preceding claims, wherein the first connecting pipe (25) has a first vertically running section (30a), a second vertically running section (30b) and a third curved section (30c) connecting the first and the second segment (30a, 30b) in the apex area (30).

6. Cleaning device according to one of the preceding claims, wherein the waste water tank (6) has an aeration (37).

7. Cleaning device according to claim 6, wherein a float valve (38) is arranged in the aeration (37) above the waste water tank (6), which float valve seals the aeration in a waterproofed manner if the process water increases to the float valve (38).

8. Cleaning device according to one of the preceding claims, wherein the second connecting pipe (26) has a highest area (33) which lies higher than the apex area (30) of the first connecting pipe (25).

9. Cleaning device according to one of the preceding claims, wherein the second connecting pipe (26) has an aeration (34).

10. Cleaning device according to one of the preceding claims, wherein the regulator (4) is designed to set a water level (N2) in the vat (1) during the extraction of heat from the waste water tank (6) by the heat pump (7-10), which water level lies below the highest point of the apex area (30) of the first connecting pipe (25).

11. Cleaning device according to one of the preceding claims, wherein the controller (4) is designed to melt at least one part of the ice in the waste water tank (6) by inserting process water from the vat (1) during the cleaning process, and in particular wherein die controller (4) is designed to heat process water in the vat (1) by the heat pump (7-10) in a process phase and in doing so to partly freeze partly the waste water in the waste water tank (6), thereafter to discharge non frozen waste water from the waste water tank (6), and then, later during the process phase, to transport heated process water from the vat (1) into the waste water tank (6) for melting frozen waste water there.

12. Cleaning device according to one of the preceding claims, wherein the first connecting pipe (25) has a diameter of at least 10 mm.

## Revendications

1. Dispositif de nettoyage, particulièrement machine à laver ou lave-vaisselle, pour nettoyer un produit à nettoyer avec de l'eau de processus dans un processus de lavage, avec
une commande du dispositif (4),
une cuve (1) pour recevoir le produit à nettoyer,
un puisard (21) arrangé au-dessous de la cuve (1),
un récipient d'eau résiduelle (6) pour garder provisoirement de l'eau résiduelle de la cuve (1),
une pompe à chaleur (7 - 10) pour retirer de la chaleur du récipient d'eau résiduelle (6) et l'alimenter dans l'eau de processus dans la cuve (1),
une première conduite de raccord (25), s'étendant du puisard (21) au récipient d'eau résiduelle (6), la première conduite de raccord (25) ayant entre la cuve (1) et le récipient d'eau résiduelle une zone apicale (30) plus haute qu'une partie supérieure du récipient d'eau résiduelle (6) et plus haute que le puisard (21), la première conduite de raccord (25) s'ouvrant dans la partie supérieure du récipient d'eau résiduelle (6) et la première conduite de raccord (25) décroissant de manière monotone à partir de la zone apicale (30) vers le puisard (21),
une deuxième conduite de raccord (26), par laquelle le récipient d'eau résiduelle (6) est couplé avec un écoulement (5) du dispositif de nettoyage, et
une première pompe (15) pour transporter de l'eau de processus à travers la première conduite de raccord (25) de la cuve (1) à l'intérieur du récipient d'eau résiduelle (6),
**caractérisé en ce qu'**aucune ventilation est arrangée dans la zone apicale (30) de la première conduite de raccord (25).

2. Dispositif de nettoyage selon la revendication 1, la commande (4) étant adaptée à actionner la pompe de chaleur (7 - 10) jusqu'à l'eau de processus dans le récipient d'eau résiduelle (6) gèle au moins partiellement.

3. Dispositif de nettoyage selon l'une des revendications précédentes, la première conduite de raccord (25) décroissant de manière monotone à partir de la zone apicale (30), particulièrement strictement monotone, vers le récipient d'eau résiduelle (6).

4. Dispositif de nettoyage selon l'une des revendications précédentes, la première conduite de raccord (25) décroissant de manière strictement monotone vers le puisard (21).

5. Dispositif de nettoyage selon l'une des revendications précédentes, la première conduite de raccord (25) ayant dans la zone apicale (30) une première section verticale (30a), une deuxième section verticale (30b) et une troisième section (30c) courbée couplant la première et la deuxième section (30a, 30b).

6. Dispositif de nettoyage selon l'une des revendications précédentes, le récipient d'eau résiduelle (6) ayant une ventilation (37).

7. Dispositif de nettoyage selon la revendication 6, une soupape à flotteur (38) étant arrangée dans la ventilation (37) au-dessus du récipient d'eau résiduelle (6), fermant la ventilation de façon étanche à l'eau quand l'eau de processus augmente jusqu'à la soupape à flotteur (38).

8. Dispositif de lavage selon l'une des revendications précédentes, la deuxième conduite de raccord (26) ayant une zone la plus supérieure (33) arrangée plus haut que la zone apicale (30) de la première conduite de raccord (25).

9. Dispositif de nettoyage selon l'une des revendications précédentes, la deuxième conduite de raccord (26) ayant une ventilation (34).

10. Dispositif de nettoyage selon l'une des revendications précédentes, la commande (4) étant adaptée à ajuster, pendant l'extraction de chaleur du récipient d'eau résiduelle (6) à l'aide de la pompe à chaleur (7 - 10), un niveau d'eau (N2) dans la cuve (1), le niveau étant au-dessous du plus haut point de la zone apicale (30) de la première conduite de raccord (25).

11. Dispositif de nettoyage selon l'une des revendications précédentes, la commande étant adaptée à fondre au moins une partie de la glace située dans le récipient d'eau résiduelle (6) pendant le processus de lavage en alimentant de l'eau de processus de la cuve (1), et particulièrement la commande (4) étant adaptée à chauffer de l'eau de processus dans la cuve (1) à l'aide de la pompe à chaleur (7 - 10) pendant une phase de processus et au même temps de partiellement geler l'eau résiduelle dans le récipient d'eau résiduelle (6), ensuite d'évacuer de l'eau résiduelle non encore gelée du récipient d'eau résiduelle (6), et ensuite, plus tard dans la phase de processus, de guider de l'eau de processus chauffée de la cuve (1) dans le récipient d'eau résiduelle (6) afin de fondre de l'eau gelée situé là-bas.

12. Dispositif de nettoyage selon l'une des revendications précédentes, la première conduite de raccord (25) ayant un diamètre d'au moins 10 mm.
